# EUROPÄISCHE PATENTANMELDUNG

(11) **EP 2 409 958 A1**
(43) Veröffentlichungstag der Anmeldung: **25.01.2012**
(21) Anmeldenummer: 11004840.2
(22) Anmeldetag: 14.06.2011
(51) Int. Cl.: C03B 9/34, C03B 9/193

(54) **Vorrichtung und Verfahren zur Herstellung von geblasenen Hohlkörpern aus Glas**

(30) Priorität: 22.07.2010 DE 102010031849
(71) Anmelder: Zwiesel Kristallglas AG, 94227 Zwiesel (DE)
(72) Erfinder: Heller, Kurt, 94258 Frauenau (DE)
(74) Vertreter: Müller-Boré & Partner Patentanwälte

(57) **Zusammenfassung**

Die Erfindung betrifft eine Vorrichtung und ein Verfahren zum Herstellen von geblasenen Hohlkörpern aus Glas mit:
einer Vorform (5) zum Aufnehmen eines Glastropfens (6),
einem Preßkolben (1) zum Pressen des Glastropfens (6),
einer Spannvorrichtung (3, 4) zum Fixieren eines durch Pressen ausgebildeten Glasrands (6b),
einer Gaszufuhr (20, 21) zum Vor- und Fertigblasen,
wobei der Preßkolben (1) an seinem Außenumfang eine Preßhülse (2) aufweist, die beim Preßvorgang in eine vorgegebene Stellung bringbar ist und wobei ein Volumenausgleich einer Glasmengenschwankung über den Preßkolben (1) erfolgt.

## Beschreibung

Die vorliegende Erfindung betrifft eine Vorrichtung sowie ein Verfahren zum Herstellen von geblasenen Hohlkörpern aus Glas.

Geblasene Hohlkörper aus Glas werden durch Pressen von geschmolzenem Glas in einer Vorform und anschließendem Vor- und Fertigblasen hergestellt. Hierzu hat beispielsweise eine in der DE 29 46 382 A1 offenbarte Maschine zum Herstellen von geblasenen Hohlkörpern aus Glas eine Aufnahmeeinrichtung, eine Vorformeinrichtung, eine Fertigblaseinrichtung sowie eine Vielzahl von Hilfseinrichtungen, die jeweils auf einer Karussellmaschine angeordnet sind. Derartige Maschinen leiden jedoch an dem Nachteil, daß in einer Massenproduktion mit schnell laufender Maschine eine Qualität der erzeugten Hohlkörper abnimmt und insbesondere keine hochwertigen Hohlkörper, wie beispielsweise Hohlkörper für qualitativ hochwertige Weingläser erzeugt werden können.

Die Aufgabe der Erfindung besteht somit in der Schaffung einer Vorrichtung und eines Verfahrens, womit eine Qualität von erzeugten Hohlkörpern selbst bei einer Massenproduktion gesteigert werden kann sowie eine Produktivität erhöht werden kann, indem nur geringe Ausschußglasmengen anfallen.

Diese Aufgabe wird durch eine Vorrichtung und ein Verfahren gemäß den unabhängigen Ansprüchen gelöst. Vorteilhafte Weiterbildungen der Erfindung sind in den abhängigen Ansprüchen definiert.

Gemäß einem Gesichtspunkt wird eine Vorrichtung zum Herstellen von geblasenen Hohlkörpern aus Glas geschaffen, die folgendes aufweist:
eine Vorform zum Aufnehmen eines Glastropfens,
einen Preß- oder Druckkolben zum Pressen des Glastropfens,
eine Spannvorrichtung bzw. ein Spannfutter zum Fixieren eines durch Pressen ausgebildeten Glasrands (indem geschmolzenes Glas in Zwischenräume des geschlossenen Spannfutters fließt und dort erstarrt),
eine Gaszufuhr zum Vor- und Fertigblasen,
wobei der Preßkolben an seinem Außenumfang eine Preßhülse aufweist, die beim Preßvorgang in eine vorgegebene Stellung bringbar ist und wobei ein Volumenausgleich einer Glasmengenschwankung über den Preßkolben erfolgt.

Die Preßhülse sorgt dabei für eine hervorragende Abdichtung des Glastropfens an dessen Umfang und zu einem genau definierten Glasrand bzw. Kappenring bzw. Blaskappe, weil die Preßhülse in eine genau definierte vorgegebene bzw. vorgebbare Position gebracht wird. Ein Glasvolumenausgleich zum Ausgleichen einer Glasmengentoleranz wird durch unterschiedliche Positionierungen des Preßkolbens erzielt. In anderen Worten befindet sich der Preßkolben am Ende des Preßvorgangs in einer höheren Stellung, wenn eine Glasmenge größer ist und umgekehrt in einer niedrigeren Stellung, wenn eine Glasmenge geringer ist.

Die Preßhülse schafft eine gegenüber einer herkömmlichen Abdichtung über die Spannvorrichtung wesentlich verbesserte Abdichtung, so daß ein anschließender Blasvorgang besser gesteuert werden kann. Darüber hinaus wird ein Glasrand bzw. eine Blaskappe durch Vorhandensein der Preßhülse verkleinert, so daß ein geringeres Glasvolumen zum Herstellen des Hohlkörpers erforderlich ist. In anderen Worten wird ein anschließend abzutrennender Glasrand bzw. eine Blaskappe, die wieder eingeschmolzen werden, in seinem/ihrem Volumen verringert, um den Fertigungsprozess zu optimieren. Da die Spannvorrichtung keinerlei Abdichtfunktion haben muß, kann diese einfacher gestaltet werden und auch viel einfacher gewechselt werden, wenn ein Futterwechsel erforderlich ist.

Vorzugsweise weist die Preßhülse an einem unteren Abschnitt einen Durchmesser im wesentlichen gleich einem Außendurchmesser des Preßkolbens auf, um zwischen Ober- und Unterseite des Preßkolbens abzudichten, und weist an einem oberen Abschnitt einen größeren Durchmesser auf, um einen Ringspalt zwischen Preßkolben und Preßhülse freizugeben.

Indem der untere Abschnitt der Preßhülse im wesentlichen den gleichen Durchmesser wie ein Außendurchmesser des Preßkolbens hat, wird eine ausreichende bzw. hervorragende Abdichtung zwischen dem Preßkolben und der Preßhülse erzielt. Um darüber hinaus eine Leichtgängigkeit der Bewegung des Preßkolbens innerhalb der Preßhülse zu erzielen, wird eine sogenannte Spielpassung angewandt, das heißt, ein Durchmesser des unteren Abschnitts der Hülse ist geringfügig größer als der Außendurchmesser des Preßkolbens. Es kann jedoch auch eine Übergangspassung angewandt werden, wenn die Abdichtung verbessert werden soll und die Leichtgängigkeit des Preßkolbens als sekundär betrachtet wird.

Indem des weiteren der obere Abschnitt der Preßhülse vorzugsweise einen größeren Durchmesser als der Außendurchmesser des Preßkolbens aufweist, wird ein Ringspalt zwischen Preßkolben und Preßhülse freigegeben, wenn der Preßkolben in eine obere Position (Blasposition) gebracht wird. Auf diese Weise kann durch eine Relativbewegung zwischen dem Preßkolben und der Preßhülse in der unteren Stellung des Preßkolbens eine im wesentlichen vollständige Abdichtung zwischen Preßkolben und Preßhülse vorgesehen werden, während zum Blasen ein Ringspalt zwischen diesen Komponenten freigegeben wird, wenn der Preßkolben in seine obere Stellung überführt wird.

Vorzugsweise weist die Preßhülse eine obere Wand auf, um zwischen einer Oberseite des Preßkolbens und der Preßhülse einen abgeschlossenen Raum zu bilden, der mit einer Gaszufuhr und/oder einem Gasauslass verbindbar oder verbunden ist.

Indem die Preßhülse des weiteren die obere Wand aufweist, mit der die Preßhülse nach oben hin ein abgeschlossenes Volumen bildet, das heißt nach oben hin geschlossen ist, wird zwischen der Oberseite des Preßkolbens und der Preßhülse ein abgeschlossener Raum mit geringem Volumen geschaffen, der vorzugsweise mit der Gaszufuhr und/oder einem Gasauslauß verbunden ist bzw. verbindbar ist. Da der abgeschlossene Raum ein minimales Volumen aufweist, kann ein Druck in dem abgeschlossenen Raum sehr schnell durch Steuern entsprechender Ventile der Gaszufuhr bzw. des Gasauslasses variiert werden, um eine unterbrochene bzw. intermittierende Gaszufuhr bzw. ein Entlüften des abgeschlossenen Raums zu ermöglichen. Auf diese Weise kann ein aus dem Glastropfen erzeugtes Glaskölbel auf intermittierende Weise mit Gasstößen ausgeblasen werden bzw. entlüftet werden.

Weiter bevorzugt sind Mittel vorgesehen, um den Glastropfen so in die Vorform einzubringen, dass Scherenmarken des Glastropfens außerhalb einer Ober- und Unterseite, vorzugsweise auf lateralen Seiten des Glastropfens angeordnet sind.

Wenn die Scherenmarken auf lateralen Seiten des Glastropfens angeordnet sind, hat dies den Vorteil, daß die Scherenmarken nach dem Pressen und Blasen sich in dem Glasrand bzw. Kappenring bzw. der Blaskappe befinden, die nicht zum Endprodukt gehört, das heißt, in einem Bereich, der vor der Endbearbeitung abgetrennt und wieder eingeschmolzen wird. Auf diese Weise hat das Endprodukt wie beispielsweise ein Weinglas eine hervorragende Qualität, weil keine Scherenmarke in dem Glas des Endprodukts enthalten ist. In anderen Worten hat das Endprodukt keinerlei optische Verzerrungen aufgrund einer Scherenmarke des Glases.

Weiter bevorzugt weist die Gaszufuhr ein Vorblasventil, ein Fertigblasventil und ein Entlüftungsventil auf, wobei ein Gasdruck des Vorblasventils vorzugsweise niedriger als ein Gasdruck des Fertigblasventils ist.

lndem die Vorrichtung des weiteren das Vorblasventil, Fertigblasventil und Entlüftungsventil aufweist, kann ein Blasvorgang auf intermittierende Weise sehr präzise gesteuert werden, insbesondere in Verbindung mit dem minimierten Gasvolumen zwischen der Oberseite des Preßkolbens und der oberen Wand der Preßhülse. Weiter bevorzugt wird das Vorblasventil mit einem geringeren Druck beaufschlagt als das Fertigblasventil.

Gemäß einem weiteren Gesichtspunkt wird ein Verfahren zum Herstellen von geblasenen Hohlkörpern aus Glas mit folgenden Schritten geschaffen:
Einbringen eines Glastropfens in eine Vorform,
Pressen des Glastropfens mittels eines Preßkolbens und einer an dessen Außenumfang angebrachten Preßhülse,
Fixieren eines durch den Preßvorgang ausgebildeten Glasrands mittels einer Spannvorrichtung,
Abdichten des Glasrands durch Pressen mit der Preßhülse, indem die Preßhülse in eine vorgegebene Stellung gebracht wird,
Ausgleichen eines Volumens einer Glasmengenschwankung über die Positionierung des Preßkolbens, und
Einblasen eines Gasstroms in den abgedichteten Glastropfen zum Erzeugen des Hohlkörpers.

Vorzugsweise weist das Verfahren des weiteren mit folgenden Schritt auf:
Einbringen des Glastropfens in die Vorform so, dass Scherenmarken des Glastropfens außerhalb einer Ober- und Unterseite, vorzugsweise auf lateralen Seiten des Glastropfens angeordnet sind.

Weiter bevorzugt weist das Verfahren des weiteren folgende Schritte auf:
Drehen des Glastropfens um seine vertikal Achse,
Einblasen von Vorblasluft auf unterbrochene Weise, um aus dem Glastropfen ein Glaskölbl zu formen,
Einbringen des Glaskölbls in eine Fertigform, und
Einblasen von Ausblasluft, um das Glaskölbl an eine Wandung der Fertigform zu drücken.

Durch die Möglichkeit, die Blasluft auf exakte Weise in unterbrochener oder intermitterender Weise zuzuführen, kann ein qualitativ hochwertig geformter Hohlkörper erzeugt werden, der herkömmlich mit kontinuierlich zugeführter Blasluft nicht erzeugt werden konnte. Somit eignet sich dieses Verfahren insbesondere zum Erzeugen von Trinkgläsern der hochwertigen Sorte, insbesondere für Weingläser der Premiumqualität.

Vorzugsweise hat das Verfahren des weiteren die Schritte:
Entlüften des Glaskölbls und/oder Kühlen einer Außenseite des Glaskölbls mit Kühlluft und/oder Aerosol-Sprühnebel.

Indem vorzugsweise das Glaskölbel von der Außenseite zusätzlich mit Kühlluft und/oder einem Aerosolsprühnebel gekühlt wird, kann die Erstarrung des Glases insbesondere in Verbindung mit den Gasdruckstößen auf bevorzugte Weise gesteuert werden, um vorgegebene Glaseigenschaften zu erzielen.

Weiter bevorzugt hat das Verfahren des weiteren die Schritte:
Einspannen des geblasenen Hohlkörpers an dem Glasrand,
Anbringen eines Glasstiels an dem geblasenen Hohlkörper, und
Abtrennen des Glasrands, um ein Trinkglas, vorzugsweise ein Weinglas, zu formen.

Auf diese Weise können qualitativ hochwertige Trinkgläser in einer Massenproduktion sehr effektiv hergestellt werden, weil derartige Gläser, vorzugsweise Weingläser, keinerlei durch Scherenmarken verursachte optische Verzerrungen oder Fehler aufweisen und die Hohlkörper als Zwischenprodukt exakt eingespannt werden können, um den Stiel zu positionieren und beispielsweise durch Verschmelzen anzubringen. Eine Glasausschußmenge zum Wiedereinschmelzen ist darüber hinaus sehr klein aufgrund des kleinen Glasrands beim Pressen und Blasen des Hohlkörpers.

Die Erfindung wird nun anhand eines Ausführungsbeispiels unter Bezugnahme auf die beigefügten Zeichnungen beispielhaft näher erläutert.
Figur 1 zeigt die erfindungsgemäße Vorrichtung an einer Einspeisestation zum Einspeisen eines Glastropfens in die Vorform der Vorrichtung.
Figur 2 zeigt eine Schnittansicht der Vorrichtung nach dem Einführen eines Glastropfens.
Figur 3 zeigt den Preßvorgang, bei dem der Glastropfen in die Vorform gedrückt wird.
Figur 4 zeigt die angehobene Stellung des Preßkolbens zum Vorblasen des Glastropfens zum Formen eines Glaskölbels.
Figur 5 zeigt die Vorrichtung mit dem eingespannten Glaskölbel nach dem Beenden des Vorblasens,
Figur 6 zeigt die Vorrichtung mit dem vorgeblasenen Glaskölbel und einer Fertigform, die sich am Umfang des Glaskölbels schließt.
Figur 7 zeigt den fertig geformten Hohlkörper nach dem Fertigblasen in der Fertigform.
Fig. 8 zeigt den fertig geblasenen Hohlkörper nach dem Entfernen der Fertigform.
Figur 9 zeigt das Lösen des fertig geblasenen Hohlkörpers durch Öffnen der Spannvorrichtung und Entfernen des fertigen Hohlkörpers von der Vorrichtung.
Figur 10 zeigt eine Karussellmaschine mit einer Vielzahl von an ihrem Umfang angeordneter erfindungsgemäßer Vorrichtungen, die vorgegebene Press-, Blas- und Kühlstationen durchlaufen.
Figur 11 zeigt eine Gaszufuhr- und Ablaßvorrichtung zum Zuführen der Blasluft bzw. Entlüften.
Figur 12 zeigt eine Detailansicht von Figur 4 in der Blasstellung des Preßkolbens.

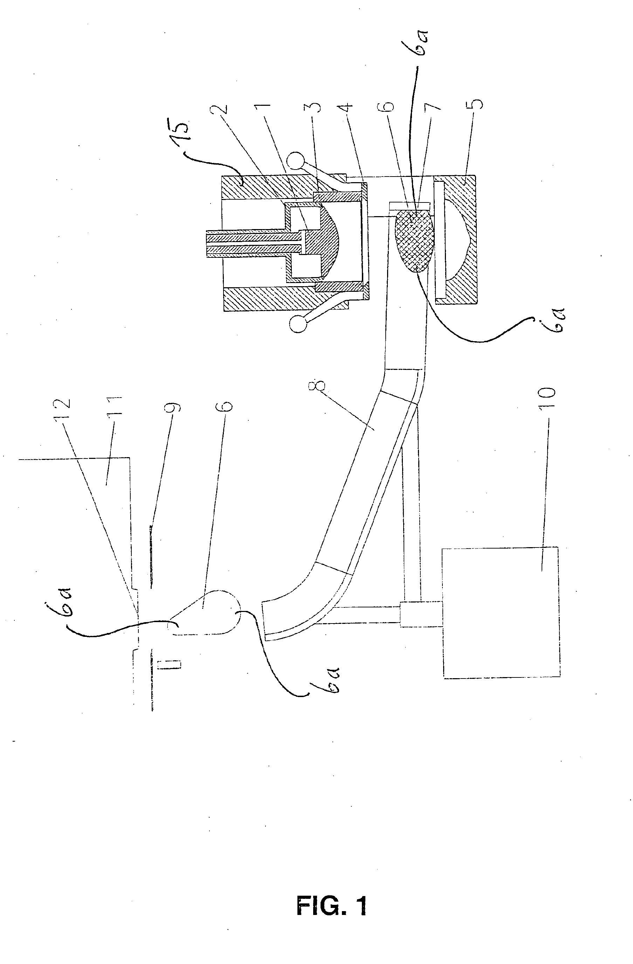

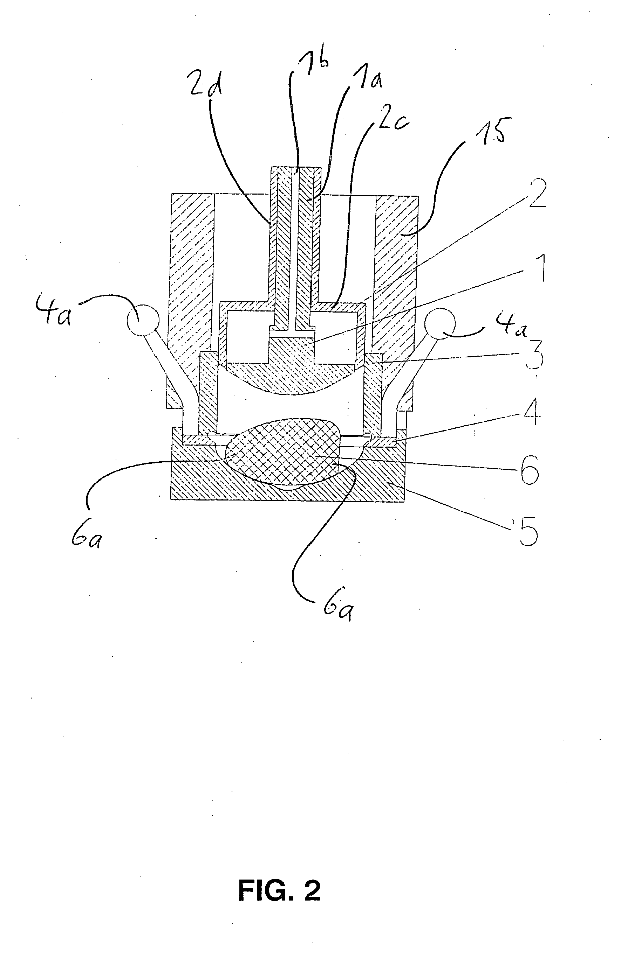

Wie in Figur 1 gezeigt ist, wird geschmolzenes Glas insbesondere in Stangenform aus einem Auslaß 12 eines Behälters 11 mit geschmolzenem Glas ausgelassen und durch eine Schere 9 abgeschnitten, um einen Glastropfen 6 mit einem vorgegebenen Volumen zu erhalten. Der Glastropfen 6 wird in eine Rinne 8 mit einem Anschlag 7 eingebracht und dabei um 90 Grad gedreht, so daß die durch die Schere 9 verursachten Scherenmarken 6a, 6a sich an lateralen Seiten des Glastropfens 6 befinden. ln dieser Position mit den Scherenmarken 6a, 6a an lateralen Seiten wird der Glastropfen 6 in eine Vorform 5 der Vorrichtung eingebracht. Danach senkt sich ein drehbarer Halter 15 auf die Vorform oder die Vorform 5 wird angehoben, um die Vorform 5 zu dem Halter 15 zu bringen. Wie des weiteren in Figur 2 gezeigt ist, senkt sich eine aus einem Futterring 3 und einer Vielzahl von Futterklauen 4 bestehende Spannvorrichtung auf die Vorform 5, um einen durch Pressen erzeugten Glasrand 6b des Glastropfens 6 zu fixieren.

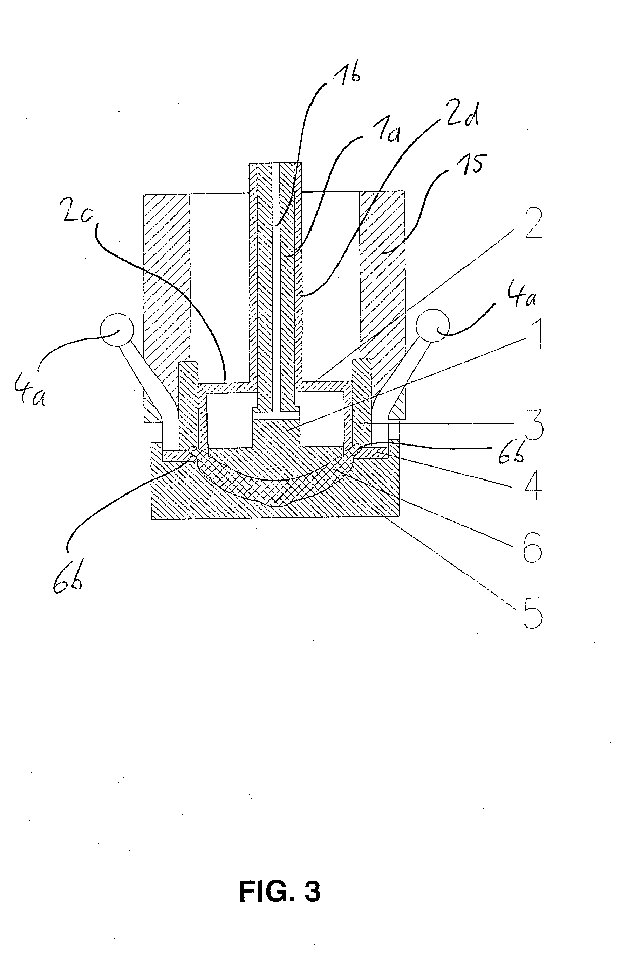

Wie des weiteren in Figur 3 gezeigt ist, wird der Preßkolben 1 mit seiner Preßhülse 2, die sich an dem Außenumfang des Preßkolbens 1 befindet, abgesenkt, um den Glastropfen 6 in der Vorform 5 zu einem Vorförmling zu pressen. Dieser Preßvorgang erfolgt, indem die Preßhülse 2 in eine vorgegebene oder vorgebbare Stellung gebracht wird, um eine hervorragende Abdichtung eines Außenumfangs des erzeugten Glasrands 6b zu erzeugen und um den Glasrand 6b in einer genau definierten Form und Dimension zu erzeugen. Dies hat den Vorteil, daß der exakte Glasrand 6b für eine Weiterverarbeitung des Hohlkörpers exakt eingespannt werden kann.

Des weiteren senkt sich der Preßkolben 1 solange bis der Glastropfen 6 vollständig in die Vorform 5 gedrückt wird. In anderen Worten schafft der Preßkolben 1 einen Volumenausgleich bezüglich einer schwankenden Glasmenge aufgrund von Toleranzen bei dem Abschervorgang mit der Schere 9. Dies erfolgt dadurch, daß der Preßkolben 1 pneumatisch oder hydraulisch oder über eine Feder mit einem vorgegebenen oder vorgebbaren Druck beaufschlagt wird und nicht wie die Preßhülse 2 in eine vorgegebene oder vorgebbare Stellung gebracht wird. Vorzugsweise ist die Preßhülse 2 über eine Führungshülse 2d an einer Betätigungsstange 1 a des Preßkolbens 1 geführt, um sich entlang einer Längsachse des Preßkolbens 1 zu bewegen.

Die Futterklauen 4 der Spannvorrichtung haben vorzugsweise Betätigungshebel 4a zum manuellen Öffnen und Schließen der Spannvorrichtung. Der Glasrand 6b wird somit über die Spannvorrichtung zwischen dem Futterring 3 und den Futterklauen 4 geklemmt, wenn das flüssige Glas in einen Zwischenraum zwischen diesen Komponenten fließt und dort erstarrt. Des weiteren wird die Abdichtung über die Preßhülse 2 durchgeführt, so daß die Spannvorrichtung keine Dichtfunktion erfüllen muß.

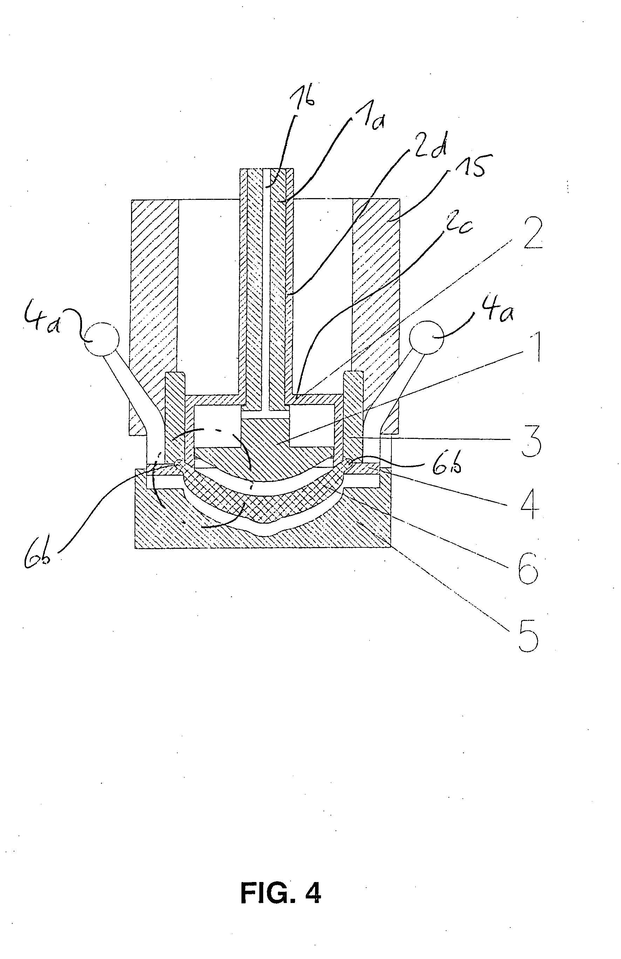

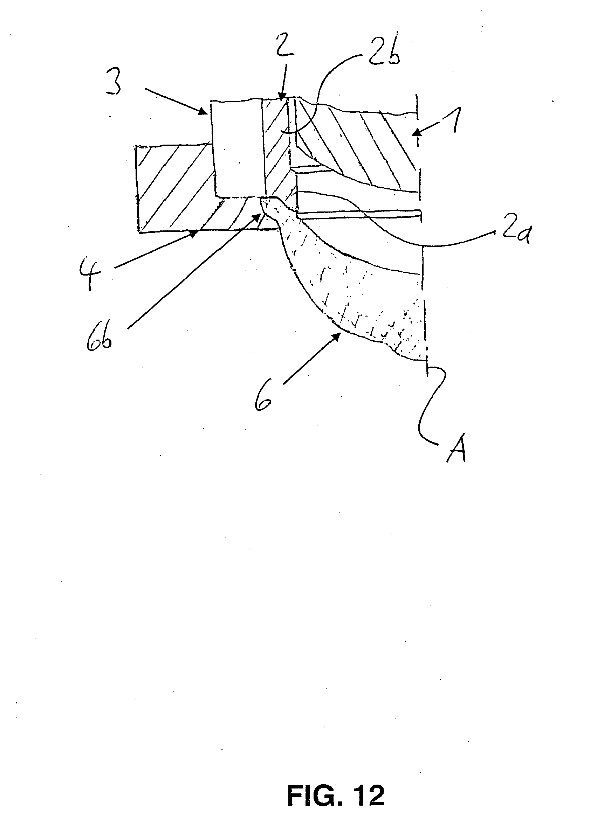

Wie des weiteren in Figur 4 gezeigt ist, wird der Preßkolben 1 zum Einleiten des Blasvorgangs gegenüber der Preßhülse 2 leicht angehoben, so daß, wie in der Detailansicht von Figur 12 gezeigt ist, ein Ringspalt zwischen einem oberen Abschnitt 2a der Preßhülse 2 und dem Preßkolben 1 erzeugt wird. In der abgesenkten Stellung der Figuren 2 und 3 hingegen befindet sind der Preßkolben 1 im Bereich des unteren Abschnitts 2a der Preßhülse 2, wobei der untere Abschnitt 2a der Preßhülse 2 einen kleineren Innendurchmesser als der obere Abschnitt 2b des Preßhülse 2 hat. Demgemäß dichtet der Preßkolben 1 an dem unteren Abschnitt 2a der Preßhülse 2, um den Preßvorgang durchzuführen, während der Preßkolben 1 durch Hochfahren zu dem oberen Abschnitt 2b der Preßhülse 2 den Ringspalt zwischen dem Preßkolben 1 und dem oberen Abschnitt 2b der Preßhülse 2 freigibt, wie in Figur 12 dargestellt ist.

Des weiteren ist oberhalb des Preßkolbens 1 durch die Umfangswände der Preßhülse 1 und eine obere Wand 2c der Preßhülse 2 ein kleiner abgeschlossener Raum ausgebildet, der mit Druckgas oder Druckluft versorgt werden kann, um den Blasvorgang zum Vor- und Fertigblasen des Glastropfens 6 durchzuführen.

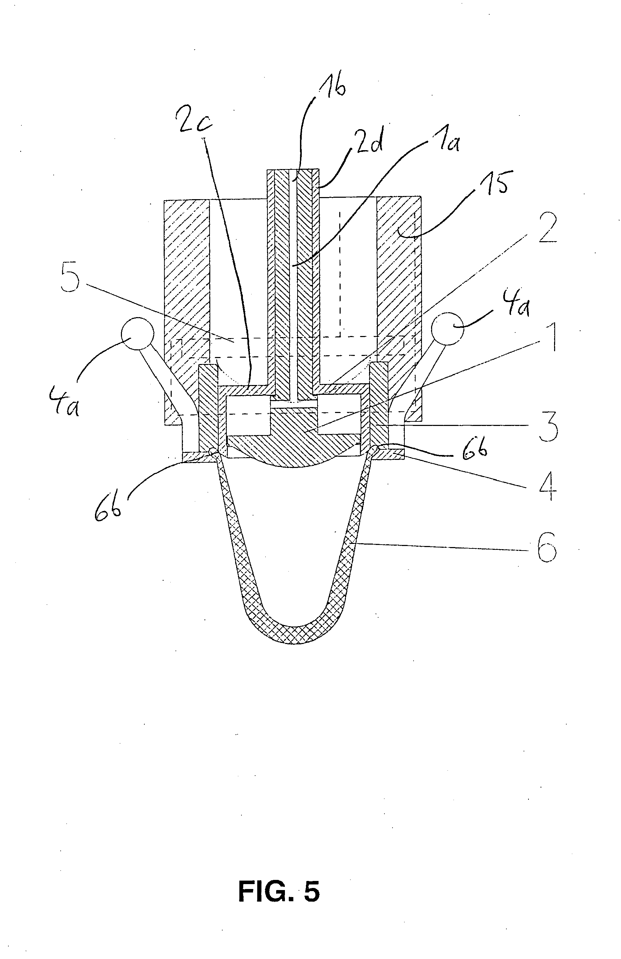

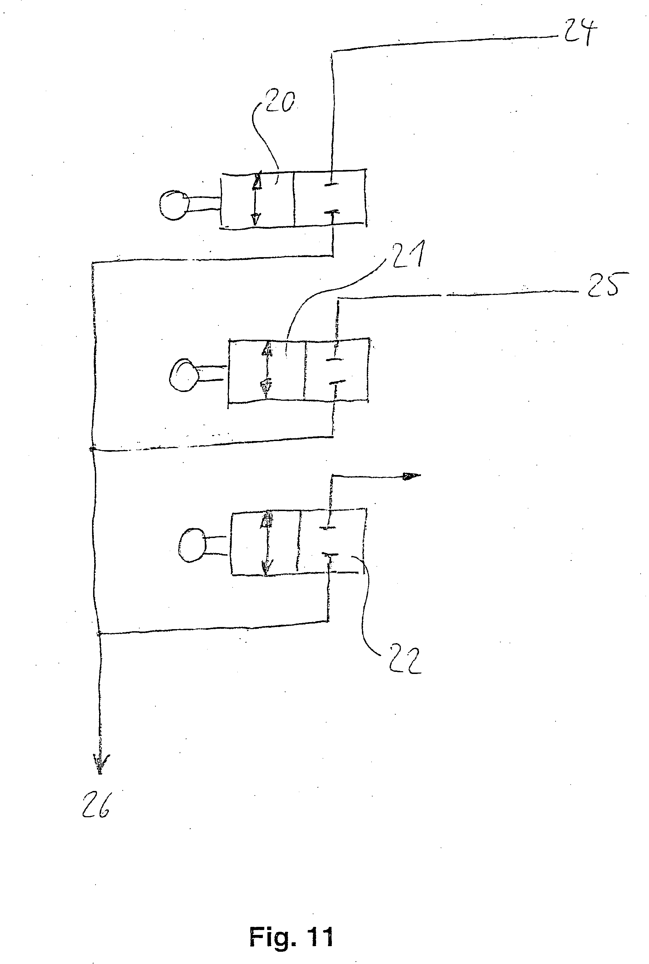

Wie der weiteren in Figur 5 gezeigt ist, wird zum Vorblasen die Vorform 5 entfernt und aus dem Glastropfen 6 entsteht ein sogenanntes Glaskölbel 6, das heißt, eine Vorform oder ein Zwischenprodukt zum Erzeugen des Hohlkörpers. Dieser Vorblasvorgang erfolgt vorzugsweise durch intermittierende bzw. unterbrochene Gasstöße über den Ringspalt zwischen dem Preßkolben 1 und dem oberen Abschnitt 2b der Preßhülse 2 während der Glastropfen bzw. das Glaskölbel 6 um seine vertikale Achse gedreht wird, vorzugsweise mit konstanter Drehzahl. Hierzu wird der oberhalb des Preßkolbens 1 ausgebildete Gasraum mit Druckluft oder Druckgas versorgt. Vorzugsweise ist hierzu ein Kanal 1b innerhalb der Betätigungsstange 1 a angeordnet, der wiederum an eine entsprechende Gaszufuhr angeschlossen ist, wie in Figur 11 gezeigt ist.

Diese Gaszufuhr weist vorzugsweise ein Vorblasventil 20 sowie ein Fertigblasventil 21 auf. Das Vorblasventil 20 ist dabei an eine Gaszufuhr 24 mit geringerem Druck angeschlossen als das Fertigblasventil 21, das an eine andere Gaszufuhr 25 mit höherem Druck angeschlossen ist. Durch Öffnen des Vorblasventils 20 bzw. des Fertigblasventils 21 wird Luft oder Gas zum Kanal 1 b des Preßkolbens 1 über den Anschluß 26 in Figur 11 zugeführt. Des weiteren kann der abgeschlossene Gasraums der Vorrichtung über ein Entlüftungsventil 22 entlüftet werden, um den Gasdruck innerhalb des Glaskölbels 6 abzusenken.

In anderen Worten wird zunächst durch einen Gasstoß eine Verformung des Glastropfens 6 zu einem Glaskölbel 6 erzeugt. Danach erwärmt sich die in dem Glaskölbel 6 befindliche Luft bzw. Gas aufgrund des noch sehr heißen Glases und erzeugt eine Druckerhöhung. Je nach Größe des zu formenden Hohlkörpers und Wandstärke wird der Druck entweder über das Vorblasventil 20 durch weitere Gasstöße weiter erhöht oder über das Entlüftungsventil 22 abgesenkt.

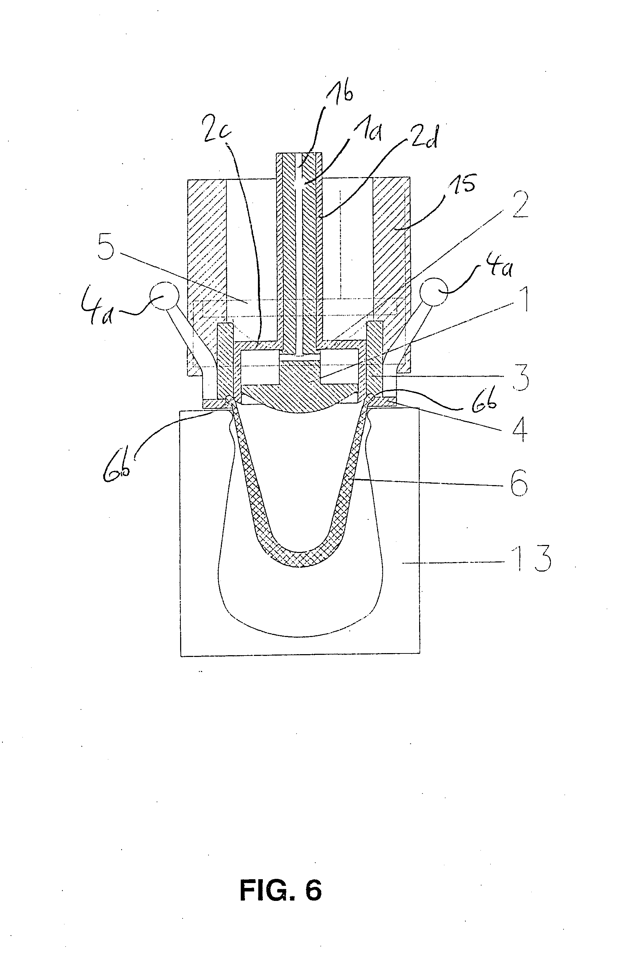

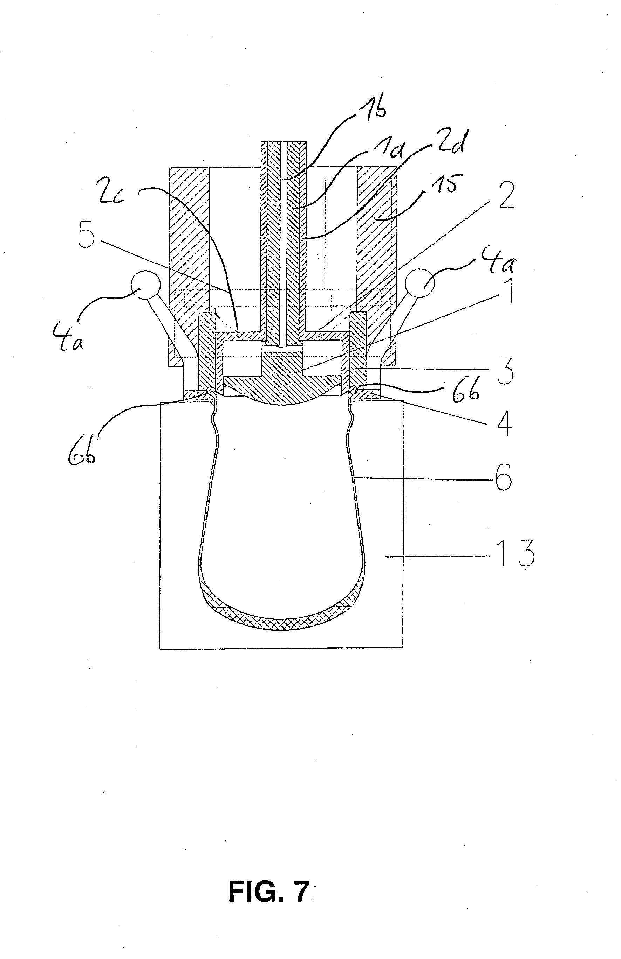

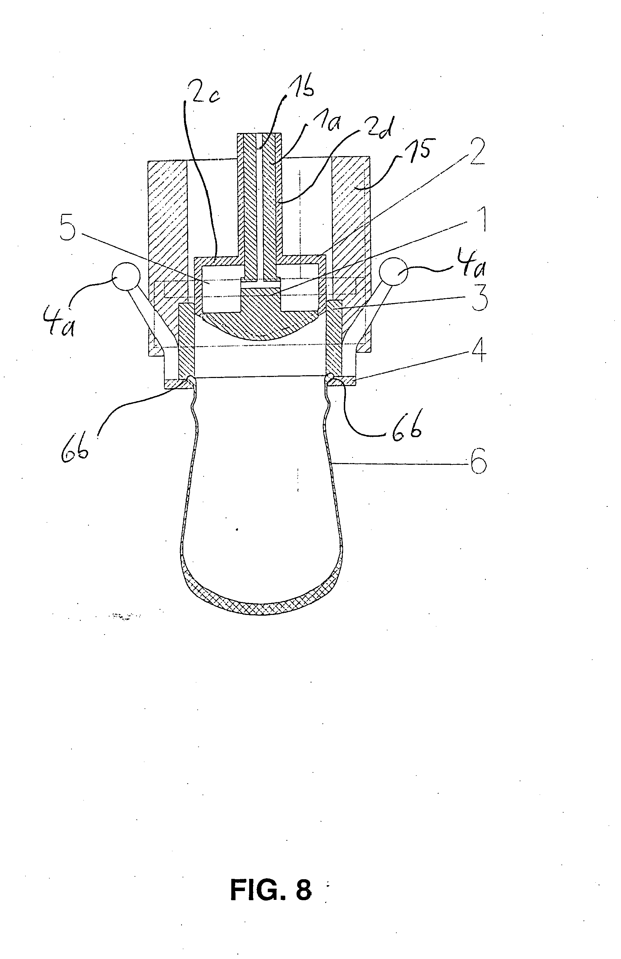

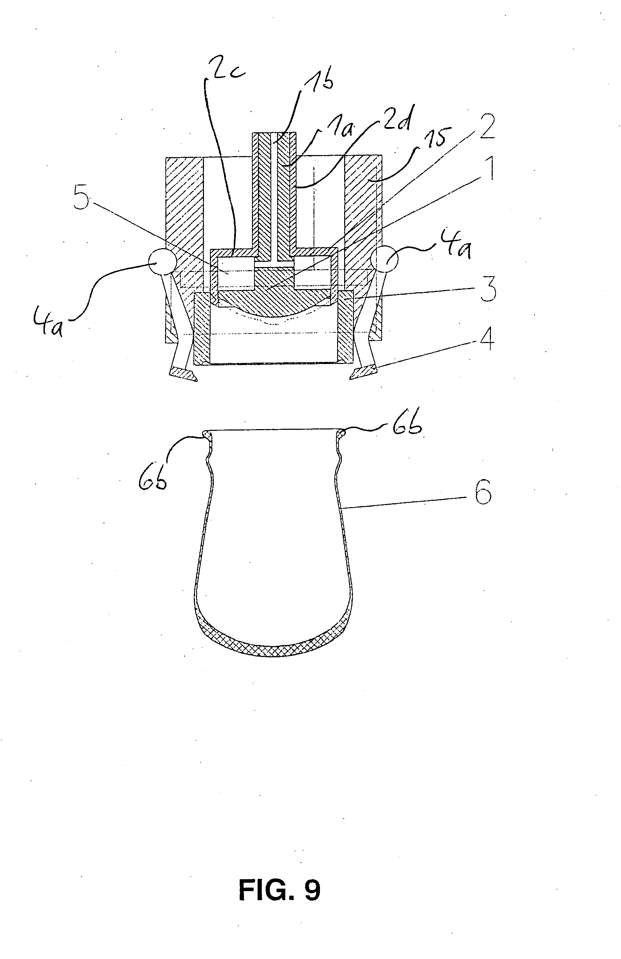

Nach dem Vorblasen des Glaskölbels 6 schließt sich eine Fertigform 13, wie in Figur 6 gezeigt ist über den Außenumfang des Glaskölbels 6. Danach wird das Fertigblasventil 21 geöffnet, um nun mit höherem Druck ein Anschmiegen des Glaskölbels 6 an die Wandung der Fertigform 13 zu erzielen. Nach dem Abschluß des Fertigblasens hat der aus dem Glaskölbel 6 geformte Hohlkörper eine Form in Übereinstimmung mit der Fertigform 13, wie in Figur 7 gezeigt ist. Danach öffnet sich die Form 13, um den fertig geformten Hohlkörper aus Glas freizugeben, wie in Figur 8 gezeigt ist. Wie des weiteren in Figur 9 gezeigt ist, kann der fertig geformte Hohlkörper mit seinem Glasrand 6b bzw. seiner Blaskappe durch Öffnen der Spannvorrichtung über den Betätigungshebel 4a der Futterklaue 4 von der Vorrichtung entfernt werden und einem weiteren Bearbeitungsschritt zugeführt werden.

Derartige weitere Bearbeitungsschritte umfassen beispielsweise das Einspannen des fertig geformten Hohlkörpers an dem vorgegebenen Glasrand 6b und Anbringen eines Glasstiels am Boden des Hohlkörpers, beispielsweise durch Erweichen einer Oberseite des Glasstiels sowie des Bodens des Hohlkörpers, um diese beiden Teile miteinander zu verschmelzen. Danach wird der Glasrand 6b abgeschnitten und vorzugsweise wieder eingeschmolzen, um der Glasherstellung wieder zugeführt zu werden. Das Abtrennen dieser Blaskappe bzw. des Glasrands 6b erfolgt entweder über einem Brenner oder vorzugsweise über eine Laservorrichtung, um einen qualitativ hochwertigen Glasrand des Hohlkörpers (Rand eines Trinkglases) zu erzeugen. Danach ist das Endprodukt im wesentlichen fertiggestellt und betrifft beispielsweise ein qualitativ hochwertiges Weinglas.

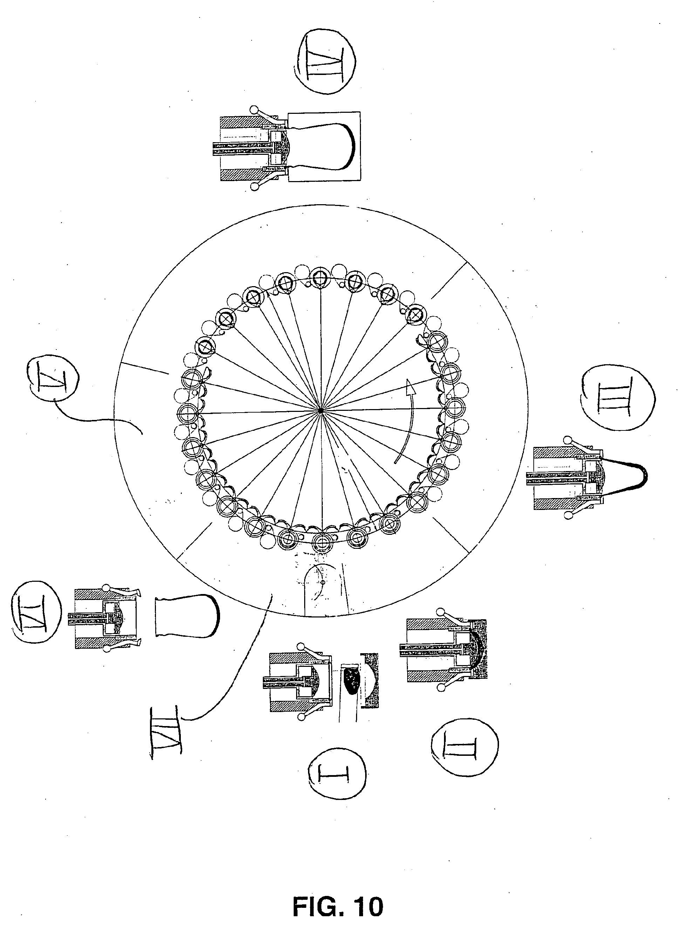

Die Vorrichtung kann vorzugsweise in eine Karussellmaschine eingebaut werden, wie in Figur 10 gezeigt ist. In dieser Karussellmaschine befinden sich eine Vielzahl von erfindungsgemäßen Vorrichtungen, beispielsweise 24 solche Vorrichtungen auf einer sich drehenden Scheibe, die durch Drehen vorgegebene Verarbeitungsstationen durchläuft und nach Abschluß aller Stationen wieder in einen neuen Zyklus eintritt.

Dabei wird an der Position I ein Glastropfen in die Vorform 5 der Vorrichtung eingebracht. In der Position II erfolgt der Preßvorgang, in Position lll erfolgt das Vorblasen und in Position IV das Fertigblasen. Danach wird im Bereich V gekühlt und in der Position VI der fertig geblasene Hohlkörper durch Öffnen der Spannvorrichtung freigegeben. Danach erfolgt vorzugsweise im Bereich VII ein Kühlvorgang der Form und es beginnt wieder mit Position l, das heißt dem Einspeisen eines Glastropfens 6.

Die Erfindung ist jedoch nicht hierauf beschränkt, sondern kann auch in einer linearen Fertigungsstraße angewandt werden, bei der entsprechende Vorrichtungen beispielsweise auf einem Ketten- oder Bandförderer befördert werden.

Als Gas zum Vor und Fertigblasen wird vorzugsweise Luft oder Stickstoff verwendet und der Druck für die Versorgung des Vorblasventils 20 beträgt etwa 0,1 bis 0,4 vorzugsweise 0,15 bis 0,3 bar (10 bis 40 Pa bzw. 15 bis 30 Pa), während der Druck für die Versorgung des Fertigblasventils 21 etwa 0,2 bis 0,7 vorzugsweise zwischen 0,3 und 0,5 bar (20 bis 70 Pa bzw. 30 bis 50 Pa) beträgt. Die Ventile 20, 21 können über entsprechende Kurvenscheiben oder elektrisch oder elektropneumatisch betätigt werden.

Die Vorrichtung und das beschriebene Verfahren eignen sich insbesondere zur Herstellung von qualitativ hochwertigen Trinkgläsern, wie beispielsweise Weingläsern. Die Erfindung ist jedoch nicht hierauf beschränkt, sondern es können auch andere Hohlkörper mit dieser Erfindung erzeugt werden, insbesondere Hohlkörper, bei denen es auf eine hohe Qualitätsanmutung des fertigen Produkts ankommt.

### Bezugszeichenliste

- 1: Preßkolben
- 1 a: Betätigungsstange
- 1 b: Kanal
- 2: Preßhülse
- 2a: unterer Abschnitt
- 2b: oberer Abschnitt
- 2c: obere Wand
- 2d: Führungshülse
- 3: Futterring
- 4: Futterklaue
- 4a: Betätigungshebel
- 5: Vorform
- 6: Glastropfen/Glaskölbl
- 6a: Scherenmarke
- 6b: Glasrand
- 7: Anschlag
- 8: Rinne
- 9: Schere
- 10: Schwenkmechanismus
- 11: Behälter
- 12: Auslass
- 13: Fertigform
- 15: Halter
- 20: Vorblasventil
- 21: Fertigblasventil
- 22: Entlüftungsventil
- 24: Gaszufuhr Vorblasen
- 25: Gaszufuhr Fertigblasen
- 26: zum Kanal des Preßkolbens
- A: Drehachse

## Patentansprüche

1. Vorrichtung zum Herstellen von geblasenen Hohlkörpern aus Glas mit:
einer Vorform (5) zum Aufnehmen eines Glastropfens (6),
einem Preßkolben (1) zum Pressen des Glastropfens (6),
einer Spannvorrichtung (3, 4) zum Fixieren eines durch Pressen ausgebildeten Glasrands (6b),
einer Gaszufuhr (20, 21) zum Vor- und Fertigblasen,
wobei der Preßkolben (1) an seinem Außenumfang eine Preßhülse (2) aufweist, die beim Preßvorgang in eine vorgegebene Stellung bringbar ist und wobei ein Volumenausgleich einer Glasmengenschwankung über den Preßkolben (1) erfolgt.

2. Vorrichtung nach Anspruch 1, wobei die Preßhülse (2) an einem unteren Abschnitt (2a) einen Durchmesser im wesentlichen gleich einem Außendurchmesser des Preßkolbens (1) aufweist, um zwischen Ober- und Unterseite des Preßkolbens (1) abzudichten, und
an einem oberen Abschnitt (2b) einen größeren Durchmesser aufweist, um einen Ringspalt zwischen Preßkolben (1) und Preßhülse (2) freizugeben.

3. Vorrichtung nach einem der vorherigen Ansprüche, wobei die Preßhülse (2) eine obere Wand (2c) aufweist, um zwischen einer Oberseite des Preßkolbens (1) und der Preßhülse (2) einen abgeschlossenen Raum zu bilden, der mit der Gaszufuhr (20, 21) und/oder einem Gasauslass (22) verbindbar oder verbunden ist.

4. Vorrichtung nach einem der vorherigen Ansprüche, wobei Mittel (8) vorgesehen sind, um den Glastropfen (6) so in die Vorform (5) einzubringen, dass Scherenmarken (6a, 6a) des Glastropfens (6) außerhalb einer Ober- und Unterseite, vorzugsweise auf lateralen Seiten des Glastropfens (6) angeordnet sind.

5. Vorrichtung nach einem der vorherigen Ansprüche, wobei die Gaszufuhr ein Vorblasventil (20), ein Fertigblasventil (21) und ein Entlüftungsventil (22) aufweist, wobei ein Gasdruck des Vorblasventils (20) vorzugsweise niedriger als ein Gasdruck des Fertigblasventils (21) ist.

6. Verfahren zum Herstellen von geblasenen Hohlkörpern aus Glas mit den Schritten:
Einbringen eines Glastropfens (6) in eine Vorform (5),
Pressen des Glastropfens (6) mittels eines Preßkolbens (1) und einer an dessen Außenumfang angebrachten Preßhülse (2),
Fixieren eines durch den Preßvorgang ausgebildeten Glasrands (6b) mittels einer Spannvorrichtung (3, 4),
Abdichten des Glasrands (6b) durch die Preßhülse (2), indem die Preßhülse (2) in eine vorgegebene Stellung gebracht wird,
Ausgleichen eines Volumens einer Glasmengenschwankung über die Positionierung des Preßkolbens (1), und
Einblasen eines Gasstroms in den abgedichteten Glastropfen (6) zum Erzeugen des Hohlkörpers.

7. Verfahren nach Anspruch 6, des weiteren mit dem Schritt:
Einbringen des Glastropfens (6) in die Vorform (5) so, dass Scherenmarken (6a, 6a) des Glastropfens (6) außerhalb einer Ober- und Unterseite, vorzugsweise auf lateralen Seiten des Glastropfens (6) angeordnet sind.

8. Verfahren nach einem der vorherigen Ansprüche 6 bis 7, des weiteren mit den Schritten:
Drehen des Glastropfens (6) um seine vertikal Achse,
Einblasen von Vorblasluft auf unterbrochene Weise, um aus dem Glastropfen (6) ein Glaskölbl zu formen,
Einbringen des Glaskölbls in eine Fertigform (13), und
Einblasen von Ausblasluft, um das Glaskölbl an eine Wandung der Fertigform (13) zu drücken.

9. Verfahren nach Anspruch 8, des weiteren mit den Schritten:
Entlüften des Glaskölbls und/oder Kühlen einer Außenseite des Glaskölbls mit Kühlluft und/oder Aerosol-Sprühnebel.

10. Verfahren nach einem der vorherigen Ansprüche 6 bis 9, des weiteren mit den Schritten:
Einspannen des geblasenen Hohlkörpers an dem Glasrand (6b),
Anbringen eines Glasstiels an dem geblasenen Hohlkörper, und
Abtrennen des Glasrands (6b), um ein Trinkglas, vorzugsweise ein Weinglas, zu formen.
